# EUROPÄISCHE PATENTSCHRIFT

(11) **EP 1 931 083 B1**
(45) Veröffentlichungstag und Bekanntmachung des Hinweises auf die Patenterteilung: **01.02.2012**
(21) Anmeldenummer: 06025234.3
(22) Anmeldetag: 06.12.2006
(51) Int. Cl.: H04L 12/26, H04L 29/06

(54) **System umfassend eine Dekodiervorrichtung und eine Protokollbeschreibungssprache sowie Verfahren zum Analysieren von Kommunikationsprotokollen mit einer generischen Dekodiervorrichtung.**
System comprising a decoding apparatus and a protocol description language and method for analyzing communication protocols with a generic decoding apparatus.
Système comprenant un dispositif de dècodage et un langage de description de protocole et mèthode d` analyse des protocoles de communication par un appareil gènèrique de dècodage.

(43) Veröffentlichungstag der Anmeldung: 11.06.2008
(73) Patentinhaber: Tektronix International Sales GmbH, 8212 Neuhausen (CH)
(72) Erfinder: Bartsch, Wolfgang, 14057 Berlin (DE); Garin, Marcus, 12359 Berlin (DE); Forsbach, Jürgen, 13591 Berlin (DE)
(74) Vertreter: Patentanwälte Hofstetter, Schurack & Skora

(56) Entgegenhaltungen:
- US-A1- 2002 004 829
- US-B1- 6 651 099
- US-B1- 6 850 852
- SYLVAIN MARQUIS ET AL.:[Online] 1. Januar 2005 (2005-01-01), Seiten 1-11, XP002427367 Kingston, Canada Gefunden im Internet: URL:http://post.queensu.ca/~trd/research/p apers/marquisParse.pdf> [gefunden am 2007-03-29]

## Beschreibung

Die vorliegende Erfindung betrifft ein System umfassend eine Dekodiervorrichtung und eine Protokollbeschreibungssprache für die Analyse von Kommunikationsprotokollen gemäß dem Oberbegriff des Anspruchs 1. Sie betrifft weiterhin ein Verfahren zum Analysieren von Kommunikationsprotokollen mit einer generischen Dekodiervorrichtung, in die mindestens eine Protokollbeschreibung eines Kommunikationsprotokolls geladen ist, wobei die mindestens eine Protokollbeschreibung in einer generischen Protokollbeschreibungssprache formuliert ist, die von der generischen Dekodiervorrichtung interpretierbar ist.

In der Kommunikationstechnik läuft die Kommunikation zwischen mehreren Teilnehmern nach so genannten Kommunikationsprotokollen ab, d. h. für die Kommunikation werden bestimmte Regeln vereinbart, an die sich die an der Kommunikation teilnehmenden Kommunikationseinrichtungen halten müssen. Zur Überwachung von Kommunikationsnetzen, insbesondere auch zum Testen von Kommunikationsnetzen nach Austausch eines Kommunikationsgeräts bzw. Erweiterung des Netzes um weitere Kommunikationsgeräte werden, um Betriebsstörungen zu verhindern, natürlich bereits vor der Inbetriebnahme unter Verwendung so genannter Protokolltester Tests durchgeführt, die ein Funktionieren der Kommunikation sicherstellen sollen bzw. bei der Fehlersuche Unterstützung leisten sollen.

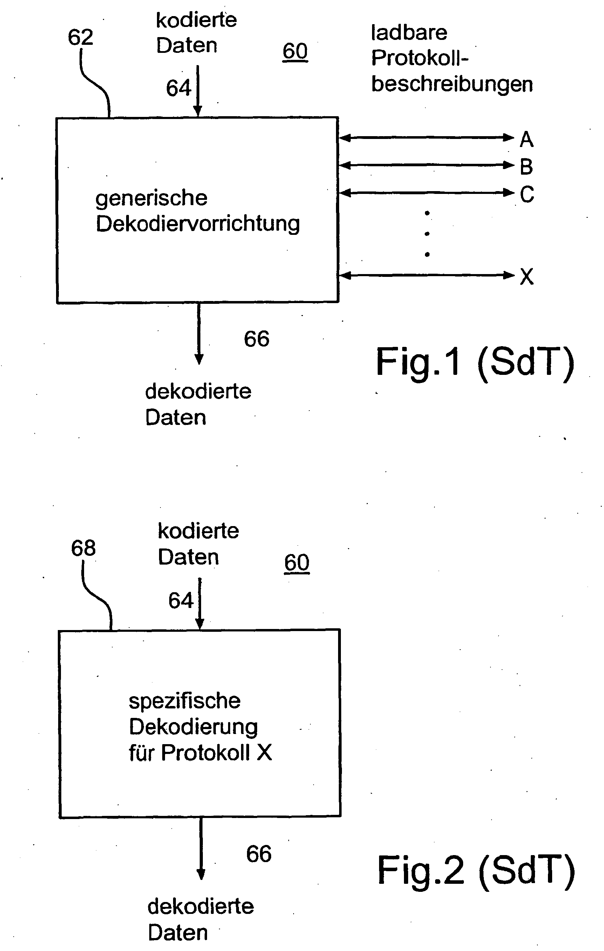

Derartige Protokolltester benötigen daher eine Dekodiervorrichtung, die es ihnen ermöglicht, die jeweils vereinbarten Kommunikationsregeln auf die mitgehörten oder als Endgerät empfangenen Daten anzuwenden, um diese zur weiteren Verarbeitung zu dekodieren. Aufgrund der sich häufig ändernden zu analysierenden Protokolle, insbesondere im Hinblick auf Geräte bzw. Hersteller spezifischer oder proprietärer Protokolle müssen derartige Dekodiervorrichtungen möglichst flexibel ausgebildet sein und werden daher gewöhnlich softwaremäßig realisiert. Besonders flexibel ist eine derartige Dekodiersoftware, wenn sie generisch, d. h. für viele Protokolle passend programmiert ist, wobei dann im Hinblick auf den speziellen Anwendungsfall die gerade benötigte Protokollbeschreibung in die generische Dekodiersoftware geladen wird. Zur Verwendung auf einer generischen Dekodiervorrichtung ist die Protokollbeschreibung in einer generischen Protokollbeschreibungssprache formuliert. Bei einer bekannten, in Fig. 1 dargestellten Dekodiervorrichtung 60 wird mindestens eines der Protokolle A bis X in eine generische Dekodiervorrichtung 62 geladen. Anschließend werden am Eingang 64 dekodierte Daten zugeführt, am Ausgang 66 dekodierte Daten zur weiteren Verarbeitung bereitgestellt.

Eine Alternative hierzu besteht darin, siehe hierzu Fig. 2, eine Dekodiervorrichtung 60 mit einem für das gerade zu analysierende Protokoll bzw. die gerade zu analysierenden Protokolle spezifischen Dekodierer 68 zu programmieren, der aufgrund dieser speziellen Anpassung sowohl schnell als auch übersichtlich analysieren kann. Problematisch hierbei ist, dass zu jedem neuen Protokoll, insbesondere sind hier zu erwähnen die verschiedensten Protokolldialekte, ein komplett neuer Softwaredecoder programmiert und neu kompiliert werden muss, was in großem Aufwand, Zeitverzug und daher hohen Kosten resultiert.

Vereinfacht ausgedrückt ist eine generische Dekodiervorrichtung, in die Protokollbeschreibungen, die mittels einer generischen Protokollbeschreibungssprache formuliert sind, geladen werden können, zu vergleichen mit einem Prozessor, der zwar für keine Anwendung speziell ausgerichtet ist, aber alles, jedoch langsam, bearbeiten kann. Ein spezifischer Dekodierer ist zu vergleichen mit einem Prozessor, der im Hinblick auf den speziellen Anwendungsfall designed wurde, d.h. das auszuführende Programm ist in Hardware gegossen.

Generische Dekodiervorrichtungen sind beispielsweise bekannt aus der EP 1 168 712 A1 und der US 2006/0146726.

Anders als bei spezifischen Dekodierern werden in Protokollbeschreibungen zur Anwendung in generischen Dekodiervorrichtungen bisher nur Abhängigkeiten aus dem Protokoll bzw. aus dem aktuell bearbeiteten Nachrichtenpaket unterstützt, so genannte Inter Layer Dependencies und Intra Layer Dependencies. Abhängigkeiten auf den Verbindungszustand oder auf andere bereits dekodierte Nachrichtenpakete, so genannte Inter Message Dependencies, können in diesen Protokollbeschreibungen bislang nicht beschrieben werden.

In diesem Zusammenhang sei noch auf die US 6,651,099 B1 verwiesen, die ein Verfahren und eine Vorrichtung zum Monitoren von Verkehr in einem Netzwerk zeigen. Dabei werden einen Verbindungspunkt in einem Computemetzwerk passierende Datenpakete untersucht, um festzustellen, zu welchem auf dem Netzwerk stattfindenden Dialog und letztlich zu welchem mit dem Dialog zusammenhängenden Anwendungsprogramm die Datenpakete gehören. Dazu wird aus ausgewählten Teilen des Datenpakets in Abhängigkeit von dem Protokoll, dem das Datenpaket entspricht, mittels eines Parsers eine Signatur erstellt. Anhand dieser Signatur wird festgestellt, ob das Datenpaket zu einem in einer Datenbank gespeicherten Dialog gehört. Gehört das Datenpaket zu einem neuen Dialog, wird für diesen neuen Dialog ein neuer Eintrag in der Datenbank erstellt, der auch Informationen zur Identifizierung weiterer Datenpakete dieses Dialogs enthält. Gehört das Datenpaket zu einem bereits existierenden Dialog, wird der Eintrag dieses bereits existierenden Dialogs auf den neuesten Stand gebracht. Der Zugriff auf die Datenbank erfolgt über einen Cache-Speicher.

Es sei ferner auf die US 2002/0004829 A1 verwiesen, die eine Vorrichtung und ein Verfahren zum Analysieren und Darstellen des OBEX-Protokolls mittels einer Single-Frame-Analyse offenbart. Der Protokollanalysator enthält eine Speichervorrichtung zum Speichern von Daten für jeden Frame, eine Erweiterungsattributadditionsvorrichtung zum Lesen der Daten für jeden Frame, zum Setzen eines einen Zustand anzeigenden Flags in einem vorbestimmten Fall und zum Hinzufügen eines Erweiterungsattributs zu den Daten im Falle, dass der Flag den Zustand anzeigt, und eine Analysevorrichtung zum Analysieren und Ausgeben der Daten für jeden Frame in einem dem Frame entsprechenden Format und zum Feststellen des Frame-Typs der Daten in Abhängigkeit von dem zu den Daten hinzugefügten Erweiterungsattribut.

Vor diesem Hintergrund liegt der vorliegenden Erfindung die Aufgabe zugrunde, eine Vorrichtung und ein Verfahren zur Verfügung zu stellen, mit der bzw. mit dem eine Protokolldekodierung in Abhängigkeit von Verbindungszuständen und Protokollelementen, die außerhalb des aktuellen Nachrichtenpakets liegen, ermöglicht wird, die bzw. das weniger umständlich und zeitaufwändig ist als die aus dem Stand der Technik bekannte Vorgehensweise.

Diese Aufgabe wird gelöst durch ein System umfassend eine Dekodiervorrichtung und eine Protokollbeschreibungssprache mit den Merkmalen von Patentanspruch 1 sowie durch ein Verfahren mit den Merkmalen von Patentanspruch 5.

Der vorliegenden Erfindung liegt die Erkenntnis zugrunde, dass die obige Aufgabe gelöst werden kann, durch eine geschickte Erweiterung auf der Basis einer generischen Dekodiervorrichtung. Dazu wird die generische Protokollbeschreibungssprache erweitert um eine erste Anweisung, die ausgelegt ist, eine generische Kontextverwaltungsvorrichtung zu veranlassen, den dekodierten Wert mindestens eines Protokollelements unter einer vorgebbaren Adresse in einem Kontextspeicher abzulegen. Der Kontextspeicher dient dem Speichern mindestens eines dekodierten Werts eines Protokollelements unter einer vorgebbaren Adresse, wobei die dekodierten Werte von Protokollelementen im Kontextspeicher abgespeichert werden, die in der Protokollbeschreibung mit einer ersten Anweisung gekennzeichnet sind. Durch diese Maßnahmen kann eine Dekodiervorrichtung auf der Basis einer generischen Dekodiervorrichtung nun die dekodierten Werte beliebiger Protokollelemente speichern und bei Bedarf wieder darauf zurückgreifen. Insbesondere kann durch die generische Kontextverwaltungsvorrichtung die generische Dekodiervorrichtung nun auf bereits in früheren Nachrichten dekodierte Informationen zurückgreifen, die für das Dekodieren der augenblicklichen Nachricht notwendig sind. Die generische Kontextverwaltungsvorrichtung hat Zugriff auf den Kontextspeicher, der die gespeicherten Nachrichteninhalte bereits dekodierter Nachrichtenpakete enthält, und auf die dekodierten Informationen des aktuell zu dekodierenden Nachrichtenpakets, die im Decoder-Ausgabespeicher abgelegt sind. Dadurch können so genannte kontextabhängige Protokolle dekodiert werden, d. h. Protokolle, bei denen für die Dekodierung eines aktuellen Nachrichtenpakets die Inhalte zuvor übertragener Nachrichtenpakete benötigt werden.

Bevorzugt umfasst die generische Protokollbeschreibungssprache eine zweite Anweisung, die ausgelegt ist, die generische Kontextverwaltungsvorrichtung zu veranlassen, den im Kontextspeicher unter einer vorgebbaren Adresse abgespeicherten dekodierten Wert mindestens eines Protokollelements auszulesen.

In einer bevorzugten Ausführungsform ist die generische Protokollbeschreibungssprache erweitert um eine Anweisung, die ausgelegt ist, zumindest aus dem dekodierten Wert mindestens eines Protokollelements die vorgebbare Adresse für den Kontextspeicher zu bilden, wobei die generische Kontextverwaltungsvorrichtung ausgebildet ist, unter dieser Adresse den dekodierten Wert mindestens eines Protokollelements abzulegen. Dies basiert auf dem Grundgedanken, dass eine Identifizierung des jeweiligen Kontextes, insbesondere bei mehreren parallelen Verbindungen, besonders einfach möglich ist, wenn Verbindungskennzeichner - je nach Protokoll ein oder mehrere Parameter -, beispielsweise CID, IMSI, IP-ADDRESS, zur Erzeugung der Adresse im Kontextspeicher, d. h. als Indexparameter, verwendet werden.

Die generische Kontextverwaltungsvorrichtung ist ausgelegt, die Kontextelemente sowie die Werte der dekodierten Protokollelemente im Decoder-Ausgabespeicher abzulegen. Um immer eine richtige Zuordnung der jeweiligen Kontexte zu jeder Nachricht auch in gespeicherten Recording Files zu gewährleisten, wird der so genannte Kontext, d. h. eine Zusammenstellung aller dekodierten Werte von Protokollelementen, die sich aus der Dekodierung eines aktuellen Nachrichtenpakets ergeben haben bzw. die dafür benötigt werden, an das entsprechende Nachrichtenpaket als Trailer angehängt.

Weiterhin bevorzugt sind die generische Kontextverwaltungsvorrichtung und der Kontextspeicher ausgelegt, insbesondere begrenzt durch einen zeitlich entsprechend dimensionierten oder von einer Bedienperson auslösbaren Rücksetzvorgang, das Auslesen des dekodierten Werts mindestens eines Protokollelements aus dem Kontextspeicher vorzunehmen, das in einer Nachricht übertragen wurde, die früher versandt wurde als die augenblicklich durch die generische Dekodiervorrichtung dekodierte Nachricht. Die mit Bezug auf das erfindungsgemäße System umfassend eine Dekodiervorrichtung und eine Protokollbeschreibungssprache im Vorhergehenden erwähnten bevorzugten Ausführungsformen und deren Vorteile gelten entsprechend, soweit anwendbar, für das erfindungsgemäße Verfahren. Dieses zeichnet sich insbesondere durch die folgenden Schritte aus: a) Speichern mindestens eines dekodierten Werts eines Protokollelements unter einer vorgebbaren Adresse in einem Kontextspeicher, während die generische Dekodiervorrichtung ein erstes Nachrichtenpaket dekodiert, wobei die dekodierten Werte von Protokollelementen im Kontextspeicher abgespeichert werden, die in der Protokollbeschreibung mit einer ersten Anweisung gekennzeichnet sind; b) Auslesen des im Kontextspeicher abgespeicherten dekodierten Werts eines Protokollelements, während die generische Dekodiervorrichtung ein zweites Nachrichtenpaket dekodiert; und c) Dekodieren des zweiten Nachrichtenpakets unter Verwendung des aus dem Kontextspeicher ausgelesenen dekodierten Werts eines Protokollelements.

Der Schritt des Speicherns umfasst bevorzugt den Schritt des Bildens einer Adresse, an dem der dekodierte Wert des Protokollelements abgespeichert wird, zumindest aus dem dekodierten Wert mindestens eines Protokollelements. Wie bereits erwähnt, lässt sich hierdurch auf sehr einfache Weise eine beispielsweise verbindungsorientierte Organisation des Kontextspeichers bewirken.

Der Schritt des Speicherns umfasst weiterhin bevorzugt den Schritt des Registrierens im Kontextspeicher der Protokollelemente, die im Kontextspeicher abgespeichert werden sollen. Dies erfolgt bevorzugt in Abhängigkeit der in die generische Dekodiervorrichtung geladenen Protokollbeschreibung automatisch und zwar insbesondere zum Zeitpunkt des Ladens der Protokollbeschreibung in die generische Dekodiervorrichtung.

Im erwähnten Schritt des Auslesens werden bevorzugt die dekodierten Werte von Protokollelementen aus dem Kontextspeicher ausgelesen, die in der Protokollbeschreibung mit einer zweiten Anweisung gekennzeichnet sind.

Die im Nachfolgenden beschriebene generische Protokollbeschreibungssprache umfasst bevorzugt eine erste Anweisung, die ausgelegt ist, eine generische Kontextverwaltungsvorrichtung zu veranlassen, einen dekodierten Wert mindestens eines Protokollelements, das in der Protokollbeschreibung mit der ersten Anweisung gekennzeichnet ist, unter einer vorgebbaren Adresse in einem Kontextspeicher abzulegen. Weiterbildungen der generischen Protokollbeschreibungssprache umfassen zumindest die bereits erwähnte zweite Anweisung, die das Auslesen des dekodierten Werts mindestens eines Protokollelements aus dem Kontextspeicher betrifft, sowie die dritte Anweisung, die ausgelegt ist, zumindest aus dem dekodierten Wert mindestens eines Protokollelements die vorgebbare Adresse für den Kontextspeicher zu bilden, unter der der dekodierte Wert mindestens eines Protokollelements abzulegen ist.

Weitere bevorzugte Ausführungsformen sind in den Unteransprüchen beschrieben.

Im Nachfolgenden wird nunmehr ein Ausführungsbeispiel der vorliegenden Erfindung unter Bezugnahme auf die beigefügten Zeichnungen näher beschrieben. Es zeigen:
- Fig. 1: in schematischer Darstellung eine aus dem Stand der Technik bekannte generische Dekodiervorrichtung;
- Fig. 2: in schematischer Darstellung eine aus dem Stand der Technik bekannte spezifische Dekodiervorrichtung für eine Protokollbeschreibung X;
- Fig. 3: in schematischer Darstellung den Aufbau eines erfindungsgemäßen Sys- tems umfassend eine Dekodiervorrichtung und eine Protokollbeschrei- bungssprache;
- Fig. 4: einen Signalflussgraphen zur Darstellung eines Aspekts des erfindungsge- mäßen Verfahrens; und
- Fig. 5: verschiedene Beispiele von Protokollbeschreibungen, die mittels einer gene- rischen Protokollbeschreibungssprache erstellt wurden.

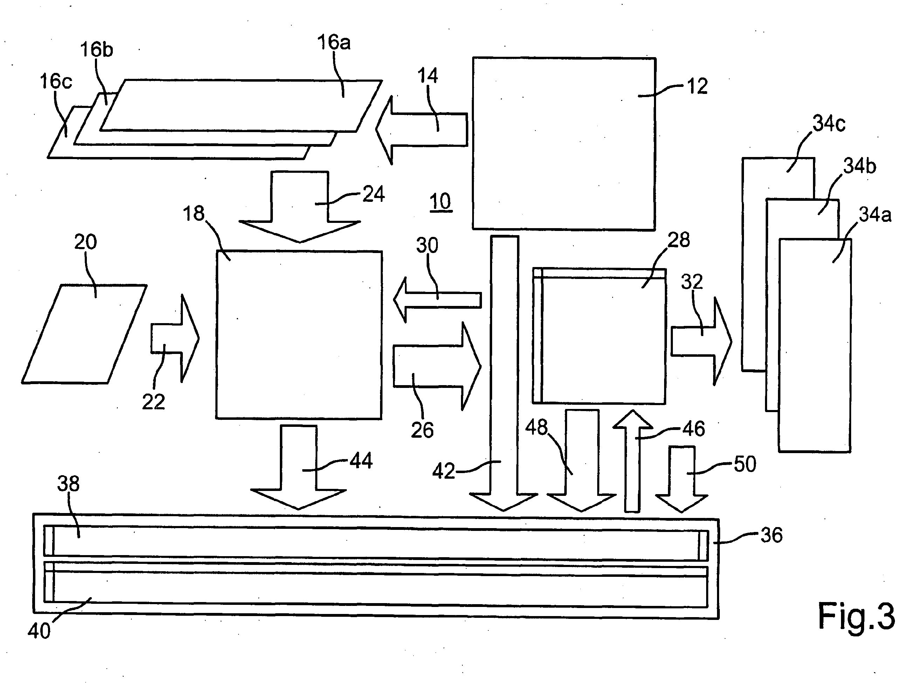

Fig. 3 zeigt in schematischer Darstellung ein Ausführungsbeispiel eines erfindungsgemäßen Systems umfassend eine Dekodiervorrichtung 10 und eine Protokollbeschreibungssprache. Sie umfasst eine Protokollladevorrichtung 12, die ausgelegt ist, eine Protokollbeschreibung, die in einer generischen Protokollbeschreibungssprache formuliert ist, von einem Speichermedium, beispielsweise einer Festplatte zu lesen und in eine maschinenlesbare Form umzuwandeln. Eine Protokollbeschreibung eines ersten Protokolls wird gemäß dem Pfeil 14 in einen ersten Speicherbereich 16a einer generischen Dekodiervorrichtung 18 geladen. Es können weitere Speicherbereiche 16b, 16c für weitere Protokollbeschreibungen vorgesehen sein. Von einer Datenquelle 20 liest die generische Dekodiervorrichtung 18 gemäß dem Pfeil 22 Daten, insbesondere rahmenweise für ein Nachrichtenpaket, ein. Diese Daten werden gemäß dem Pfeil 24 entsprechend der in dem mindestens einen Speicherbereich 16a, 16b, 16c geladenen Protokollbeschreibung von der generischen Dekodiervorrichtung 18 verarbeitet, siehe Pfeil 24, wobei die dekodierten Werte gemäß dem Pfeil 26 in einen Decoder-Ausgabespeicher 28 eingetragen werden. Der Decoder-Ausgabespeicher 28 ist wie die Datenquelle 20 nachrichtenpaketweise organisiert, d. h. stellt dekodierte Daten mit Bezug auf ein einzelnes Nachrichtenpaket zur Verfügung. Sofern für die Dekodierung des aktuellen Nachrichtenpakets durch die generische Dekodiervorrichtung 18 die dekodierten Werte von Protokollelementen benötigt werden, die im aktuellen Nachrichtenpaket übertragen wurden, so kann die generische Dekodiervorrichtung 18 diese wie durch den Pfeil 30 gekennzeichnet aus dem Decoder-Ausgabespeicher 28 auslesen. Die im Decoder-Ausgabespeicher 28 abgelegten dekodierten Werte können gemäß dem Pfeil 32 von Anwendungen 34a, 34b, 34c gelesen werden, wobei die Anwendungen insbesondere die Funktionen Gesprächsverfolgung, statistische Auswertung und Monitoring umfassen.

Soweit die Dekodiervorrichtung 10 bisher beschrieben wurde, deckt sie sich mit dem Stand der Technik. Das in Fig. 3 dargestellte Ausführungsbeispiel eines efindungsgemäßen Systems umfassend eine Dekodiervorrichtung 10 und eine Protokollbeschreibungssprache weist darüber hinaus jedoch einen Block 36 auf, der eine generische Kontextverwaltungsvorrichtung 38 und einen Kontextspeicher 40 umfasst. Im Kontextspeicher 40 sind die dekodierten Werte der in einem Registrierungsvorgang angegebenen Protokollelemente gespeichert und zwar nicht nachrichtenpaketweise, sondern über eine Vielzahl von Nachrichtenpaketen hinweg, d. h. beispielsweise für alle zu dekodierenden Nachrichtenpakete. Im dargestellten Ausführungsbeispiel ist die Protokollladevorrichtung 12 ausgelegt, wie durch den Pfeil 42 gekennzeichnet, zum Zeitpunkt des Ladens der mindestens einen Protokollbeschreibung in einen Speicherbereich 16a bis c so genannte Kontextelemente über die generische Kontextverwaltungsvorrichtung 38 im Kontextspeicher 40 zu registrieren, d.h. sie legt eine Struktur an, die auf die benötigten oder abzulegenden Kontextelemente abgestimmt ist, beispielsweise die Anzahl der dekodierten Werte eines Parameterelements, die für den jeweiligen Kontext zu speichern sind. Dazu ist die jeweilige Protokollbeschreibung um eine Anweisung (CONTEXT_KEY) ergänzt, auf die später noch detaillierter eingegangen wird. In dem dargestellten Ausführungsbeispiel erfolgt demnach die Registrierung der Kontextelemente automatisch. Diese kann selbstverständlich auch manuell vorgenommen werden.

Unter Kontextelementen sind im Rahmen der vorliegenden Erfindung die Protokollelemente zu verstehen, deren dekodierter Wert, der aufgrund der Decodierung eines ersten Nachrichtenpakets ermittelt wurde, im Kontextspeicher 40 abgespeichert werden soll, um für die Decodierung eines zweiten Nachrichtenpakets, das nach dem ersten Nachrichtenpaket übertragen wurde, zur Verfügung zu stehen. Die Registrierung umfasst weiterhin die Unterrichtung der generischen Kontextverwaltungsvorrichtung 38 über die Protokollelemente, deren dekodierte Werte zur Erzeugung einer Adresse verwendet werden, unter der die dekodierten Werte der Protokollelemente im Kontextspeicher 40 abzulegen sind.

Wie durch den Pfeil 44 gekennzeichnet, hat die generische Dekodiervorrichtung 18 über zwei weitere Anweisungen, die gemäß der vorliegenden Erfindung in die generische Protokollbeschreibungssprache aufgenommen wurden und sich daher in der Protokollbeschreibung widerspiegeln, nunmehr die Möglichkeit, das Ablegen mindestens eines dekodierten Werts eines Protokollelements im Kontextspeicher 40 über die generische Kontextverwaltungsvorrichtung 38 zu initiieren (CONTEXT_SET) bzw. das Auslesen eines im Kontextspeicher 40 abgespeicherten dekodierten Werts eines Protokollelements über die generische Kontextverwaltungsvorrichtung 38, den Pfeil 46, den Decoder-Ausgabespeicher 28 und den Pfeil 30 zu veranlassen (CONTEXT_GET). Der Pfeil 48 soll hierbei zum Ausdruck bringen, dass zur Bestimmung der Adresse des aus dem Kontextspeicher 40 auszulesenden Werts die dekodierten, für die Ermittlung der Adresse benötigten Werte zunächst aus dem Decoder-Ausgabespeicher 28 ausgelesen werden müssen. Der Pfeil 50 soll zum Ausdruck bringen, dass Mittel vorgesehen sind, beispielsweise automatisch durch entsprechende zeitliche Dimensionierung oder durch Zugriff einer Bedienperson, die mit der Anweisung "CONTEXT_KEY" vorgenommene Registrierung im Kontextspeicher zu löschen, um damit einen RESET auszulösen.

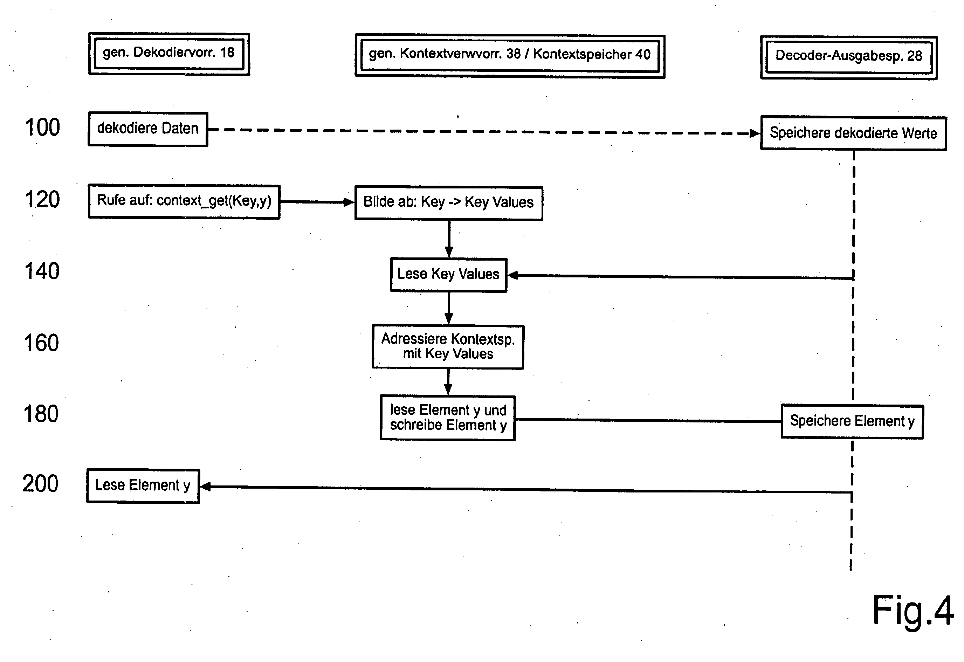

Zur Erläuterung der Funktionsweise beim Dekodieren eines Nachrichtenpakets, das auf den im Kontextspeicher 40 gespeicherten Wert eines Protokollelements eines zuvor dekodierten Nachrichtenpakets zugreifen muss, ist in Fig. 4 in schematischer Darstellung der Ablauf dargestellt, wobei auf die Aktivitäten der drei Elemente generische Dekodiervorrichtung 18, generische Kontextverwaltungsvorrichtung 38/Kontextspeicher 40 und Decoder-Ausgabespeicher 28, wie in der ersten Zeile von Fig. 4 dargestellt, eingegangen wird.

Gemäß Schritt 100 dekodiert die generische Dekodiervorrichtung 18 Daten gemäß der mindestens einen in den Speicher 16a der generischen Dekodiervorrichtung 18 geladenen Protokollbeschreibung. Die dekodierten Werte werden im Decoder-Ausgabespeicher 28 gespeichert. Wenn nun, wie im Schritt 120 dargestellt, die generische Dekodiervorrichtung 18 zur Dekodierung eines aktuellen Nachrichtenpakets auf mindestens einen dekodierten Wert eines zuvor dekodierten Nachrichtenpakets zurückgreifen muss, ruft sie die Funktion CONTEXT_GET (Key, y) auf. Dieser Schritt entspricht dem Pfeil 44 von Fig. 3. Hierbei gibt "Key" an, die dekodierten Werte welcher Protokollelemente zu verknüpfen sind, um die Adresse zu ermitteln, an der der dekodierte Wert des Protokollelements y im Kontextspeicher 40 abgelegt ist. In der generischen Kontextverwaltungsvorrichtung 38 wird gemäß der oben erwähnten Registrierung ermittelt, wie die dekodierten Werte welcher Protokollelemente zur Ermittlung der Adresse, an der der dekodierte Wert des Protokollelements y gespeichert ist, heranzuziehen sind. Die dekodierten Werte, die so genannten Key Values, die zur Ermittlung der Adresse, unter der der dekodierte Wert des Elements y im Kontextspeicher 40 gespeichert ist, verwendet werden, werden im Schritt 140 aus dem Decoder-Ausgabespeicher 28 ausgelesen. Dieser Schritt entspricht dem Pfeil 48 von Fig. 3.

Im Schritt 160 wird der Kontextspeicher 40 mit der aus den Key Values gebildeten Adresse angewiesen. Im Schritt 180 wird an der durch die Key Values bestimmten Adresse des Kontextspeichers 40 der dekodierte Wert des Elements y ausgelesen und im Decoder-Ausgabespeicher 28 abgelegt. Die Bezeichnung "Element y" in Fig. 4 bedeutet selbstverständlich der dekodierte Wert des Elements y und wurde lediglich aufgrund des wenigen vorhandenen Platzes zur Steigerung der Übersichtlichkeit so formuliert. Schritt 180 entspricht dem Pfeil 46 von Fig. 3. Schließlich wird im Schritt 200 der dekodierte Wert des Elements y von der generischen Decodiervorrichtung 18 aus dem Decoder-Ausgabespeicher 28 ausgelesen. Dies entspricht dem Pfeil 30 von Fig. 3.

In ähnlicher Weise wie mit Bezug auf Fig. 4 für die Anweisung CONTEXT_GET dargestellt, verhält es sich mit der Anweisung CONTEXT_SET, die dazu dient, den dekodierten Wert eines Protokollelements eines aktuellen Nachrichtenpakets für die Dekodierung nachfolgender Nachrichtenpakete im Kontextspeicher 40 zu speichern. Sie umfasst ebenfalls zunächst die Ermittlung der Adresse aus bereits im Decoder-Ausgabespeicher 28 abgespeicherten dekodierten Werten von Protokollelementen, an der der dekodierte Wert des Protokollelements abzuspeichern ist und anschließend die Abspeicherung des dekodierten Werts des Protokollelements, wobei diesmal mit Bezug auf Fig. 3 die Abspeicherung über den durch die Pfeile 26 und 44 angedeuteten Weg erfolgt.

Im Nachfolgenden wird zur weiteren Erläuterung unter Bezugnahme auf Ausführungsbeispiele auf die drei Anweisungen eingegangen, um die die generische Protokollbeschreibungssprache zu ergänzen ist:

### CONTEXT_KEY:

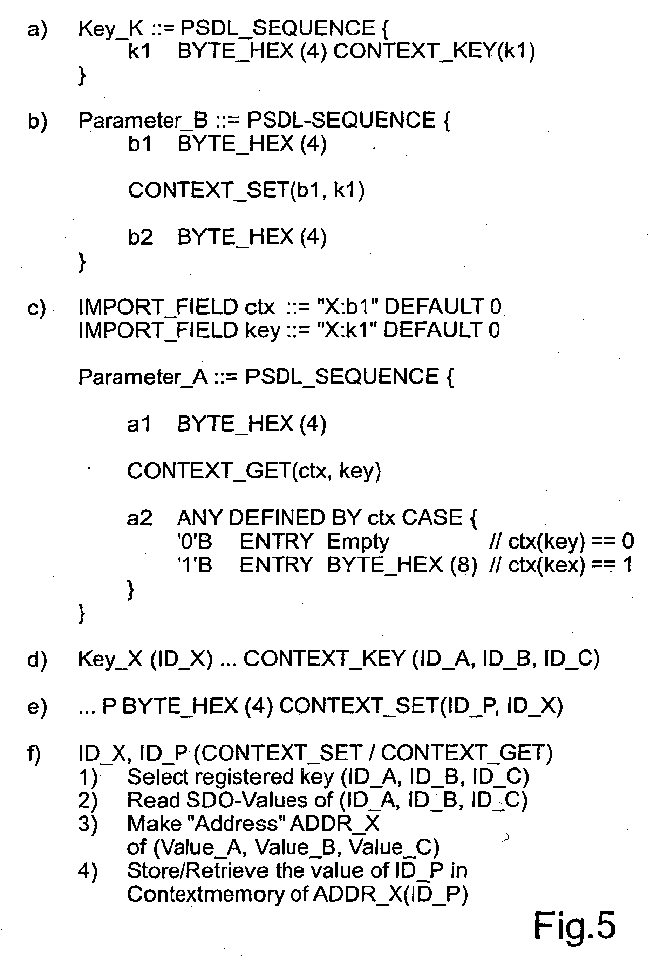

Fig. 5a zeigt eine Befehlssequenz eines Ausführungsbeispiels einer Protokollbeschreibung, in dem die Anweisung CONTEXT_KEY verwendet wird. Die Anweisung "CONTEXT_KEY" definiert ein künstliches Protokollelement, das als Argument mindestens ein Protokollelement umfasst, das um weitere Protokollelemente oder Konstanten ergänzt sein kann, deren dekodierte Werte eine bestimmte Verbindung kennzeichnen, um damit eine verbindungsbezogene Organisation des Kontextspeichers 40 zu ermöglichen. Damit lassen sich die dekodierten Werte von Protokollelementen beispielsweise verbindungsbezogen speichern und lesen. Das Argument der Anweisung "CONTEXT_KEY" dient demnach als Adresse bzw. als Indexparameter des Kontextspeichers 40. Die im Argument definierten Protokollelemente können sowohl im selben Protokoll als auch in anderen Protokollen definiert sein. Protokollelemente, die in anderen Protokollen definiert sind, werden als importierte Protokollelemente beschrieben. Die im Argument der Anweisung "CONTEXT_KEY" angegebenen Protokollelemente werden insbesondere zum Zeitpunkt des Ladens der Protokollbeschreibung in einen der Speicherbereiche 16a, 16b, 16c bei der generischen Kontextverwaltungsfunktion 36 registriert.

Es sei angemerkt, dass allen Protokollelementen eine interne ID (Identifikationscode) zugewiesen ist. Mit anderen Worten: Die Protokollbeschreibungen für die generische Protokolldekodiervorrichtung sind Text-Dateien. Parameter und Protokollelemente werden mit Namen beschrieben. Wenn das Protokoll nun in den Speicherbereich 16a, 16b, 16c geladen wird, wird jedem Parameter eine interne ID, beispielsweise eine Integer-Zahl, zugeordnet. Die generische Dekodiervorrichtung 18 arbeitet, ebenso wie die generische Kontextverwaltungsvorrichtung 38 und der Kontextspeicher 40, nur mit den internen IDs.

Zurück zu dem in Fig. 5a dargestellten Ausführungsbeispiel: Der Key, d. h. die Adresse, besteht vorliegend nur aus dem dekodierten Wert von k1. Das Protokollelement k1 kann beispielsweise eine IP4-Adresse (4 Byte) oder eine Telefonnummer sein.

### CONTEXT_SET:

Fig. 5b zeigt eine Befehlssequenz eines Ausführungsbeispiels einer Protokollbeschreibung, in dem die Anweisung "CONTEXT_SET" verwendet wird. CONTEXT_SET definiert das Schreiben eines dekodierten Werts eines Protokollelements in den Kontextspeicher 40 unter einer vorgebbaren, mit Bezug auf die Anweisung "CONTEXT_KEY" definierten Adresse. Protokollelemente, die mit der Anweisung "CONTEXT_SET" beschrieben sind, werden ebenfalls im Registrierungsschritt in der generischen Kontextverwaltungsvorrichtung 38 registriert. Um die kontextabhängige Dekodierung zu ermöglichen, d. h. die Dekodierung, die über den Inhalt eines aktuellen Nachrichtenpakets hinausgeht und Bezug nimmt auf bereits vorher übertragene Nachrichtenpakete, wird in der Protokollbeschreibung die Abhängigkeit auf ein so genanntes Kontextelement ähnlich beschrieben wie die auf ein in derselben Nachricht liegendes Protokollelement. Diese Beschreibung der Abhängigkeit wird mit dem Schlüsselwort CONTEXT_SET gekennzeichnet. Während des Dekodierens werden nun die mit CONTEXT_SET gekennzeichneten Protokollelemente der generischen Kontextverwaltungsvorrichtung übergeben, die sie unter der angegebenen Adresse im Kontextspeicher abspeichert Mit Bezug auf das in Fig. 5b dargestellte Ausführungsbeispiel besteht der Parameter B aus den Protokollelementen b1 und b2. Entsprechend der Anweisung wird nach dem Dekodieren des Protokollelements b1 der dekodierte Wert im Kontextspeicher 40 unter der Adresse "k1" abgelegt. Der dekodierte Wert des Protokollelements b2 hingegen wird nicht im Kontextspeicher 40 gespeichert.

### CONTEXT_GET:

Fig. 5c zeigt eine Befehlssequenz eines Ausführungsbeispiels einer Protokollbeschreibung, in der die Anweisung "CONTEXT_GET" verwendet wird. Um die kontextabhängige Dekodierung zu ermöglichen, d. h. die Dekodierung, die über den Inhalt eines aktuellen Nachrichtenpakets hinausgeht und Bezug nimmt auf bereits vorher übertragene Nachrichtenpakete, wird in der Protokollbeschreibung die Abhängigkeit auf ein so genanntes Kontextelement ähnlich beschrieben wie die auf ein in derselben Nachricht liegendes Protokollelement. Diese Beschreibung der Abhängigkeit wird mit dem Schlüsselwort CONTEXT_GET gekennzeichnet. Protokollelemente, die mit der Anweisung "CONTEXT_GET" beschrieben sind, werden ebenfalls im Registrierungsschritt in der generischen Kontextverwaltungsvorrichtung 38 registriert. Die Anweisung "CONTEXT_GET" definiert das Lesen eines im Kontextspeicher 40 unter einer angegebenen Adresse abgelegten dekodierten Werts eines Protokollelements. Sie dient demnach zum Aufruf der generischen Kontextverwaltungsvorrichtung 38, um das Auslesen des dekodierten Werts eines Protokollelements an der vorgegebenen Adresse aus dem Kontextspeicher 40 zu initiieren und sie der generischen Dekodiervorrichtung 18 zur Ermöglichung einer kontextabhängigen Dekodierung zur Verfügung zu stellen.

Gemäß dem in Fig. 5c dargestellten Ausführungsbeispiel ist der Parameter A in einem Protokoll Y definiert. Der Kontextspeicher 40 wird mit der Adresse "KEY" nach dem dekodierten Wert des Protokollelements CTX abgefragt. Die Dekodierung des Protokollelements a2 hängt von diesem abgefragten Wert ab. Gemäß der Importfunktion wird der Wert "CTX" im Protokoll Y dem Wert "b1" des Protokoll X gleichgesetzt, der Wert "KEY" des Protokolls Y dem Wert "k1" des Protokolls X. Die Adresse "KEY" und der Kontextparameter sind im Protokoll X definiert und werden durch die dargestellte Importfunktion in die Protokollbeschreibung des Protokolls Y importiert. Der Parameter a1 erfordert keinen Zugriff auf den Kontextspeicher.

Die in Fig. 5d gezeigte Befehlssequenz bringt die Umsetzung über eine ID zum Ausdruck. Demnach wird im Kontextspeicher unter der ID ID_X die Adresse Key_X angelegt, die sich aus den dekodierten Werten der Protokollelemente mit den IDs ID_A, ID_B und ID_C zusammensetzt. Erfolgt nun ein Zugriff auf den Kontextspeicher 40, so wird über diese registrierten IDs der Decoder-Ausgabespeicher 28 abgefragt und der aktuelle Wert der Adresse, d. h. der aktuelle Wert für den Parameter Key_X bestimmt. Dieser Wert wird üblicherweise nur einmal pro Nachricht ermittelt und dient nun zur Adressierung des Kontextspeichers 40, unter dem beispielsweise im Hinblick auf die in Fig. 5e dargestellte Befehlssequenz der dekodierte Wert des Protokollelements mit der ID ID_P geschrieben wird.

In Fig. 5f sind zur Verdeutlichung nochmals die bereits mit Bezug auf Fig. 4 dargestellten Abläufe wiederholt: Zunächst wird die registrierte Adresse, die die dekodierten Werte der Parameter ID_A, ID_B und ID_C zu ihrer Erzeugung verwendet, ausgewählt. Anschließend werden die dekodierten Werte dieser Parameter aus dem Decoder-Ausgabespeicher 28 ausgelesen. Aus diesen ausgelesenen Werten (Value_A, Value_B, Value_C) wird eine Adresse gebildet. Dies kann beispielsweise dadurch erfolgen, dass die Werte aneinandergehängt werden und dieser neu kreierte Wert an eine Hash-Funktion übergeben wird, die dann eine Speicheradresse im Kontextspeicher 40 liefert. Unter dieser Adresse (ID_X) wird der dekodierte Wert des Parameters ID_P abgelegt bzw. ausgelesen.

### Weitere Anmerkungen:

Auch zur Bestimmung der Adresse, unter der im Kontextspeicher 40 der dekodierte Wert eines Protokollelements abgelegt werden soll oder ausgelesen werden soll, können Protokollelemente des aktuellen Protokolls oder auch aus anderen Protokollen verwendet werden. Letztere sind dann importierte Protokollelemente.

## Patentansprüche

1. System umfassend eine Dekodiervorrichtung (10) und eine Protokollbeschreibungssprache für die Analyse von Kommunikationsprotokollen umfassend:
- eine generische Dekodiervorrichtung (18), in die mindestens eine Protokollbeschreibung eines Kommunikationsprotokolls ladbar ist, wobei die mindestens eine Protokollbeschreibung in einer generischen Protokollbeschreibungssprache formuliert ist, die von der generischen Dekodiervorrichtung (18) interpretierbar ist;
wobei die Dekodiervorrichtung (10) weiterhin umfasst:
- einen Kontextspeicher (40) zum Speichern von dekodierten Werten von Protokollelementen unter einer vorgebbaren Adresse; und
- eine generische Kontextvenwaltungsvorrichtung (38), die ausgelegt ist, zumindest das Speichern und das Auslesen der dekodierten Werte von Protokollelementen in bzw. aus dem Kontextspeicher (40) durch die generische Dekodiervorrichtung zu ermöglichen;
**dadurch gekennzeichnet,**
**dass** die generische Protokollbeschreibungssprache erweitert ist um eine erste Anweisung, die ausgelegt ist, die generische Kontextverwaltungsvorrichtung (38) zu veranlassen, den dekodierten Wert mindestens eines Protokollelements unter einer vorgebbaren Adresse im Kontextspeicher (40) abzulegen; und
der Kontextspeicher (40) dazu ausgelegt ist, die dekodierten Werte von Protokollelementen zu speichern, die in der Protokollbeschreibung mit einer ersten Anweisung **gekennzeichnet** sind.

2. System nach Anspruch 1,
**dadurch gekennzeichnet,**
**dass** die generische Protokollbeschreibungssprache erweitert ist um eine zweite Anweisung, die ausgelegt ist, die generische Kontextverwaltungsvorrichtung (38) zu veranlassen, den im Kontextspeicher (40) unter einer vorgebbaren Adresse abgespeicherten dekodierten Wert mindestens eines Protokollelements auszulesen.

3. System nach einem der Ansprüche 1 oder 2,
**dadurch gekennzeichnet,**
**dass** die generische Protokollbeschreibungssprache erweitert ist um eine dritte Anweisung, die ausgelegt ist, zumindest aus dem dekodierten Wert mindestens eines Protokollelements die vorgebbare Adresse für den Kontextspeicher (40) zu bilden, wobei die generische Kontextverwaltungsvorrichtung (38) ausgebildet ist, unter dieser Adresse den dekodierten Wert mindestens eines Protokollelements abzulegen.

4. System nach einem der vorhergehenden Ansprüche,
**dadurch gekennzeichnet,**
**dass** die generische Kontextverwaltungsvorrichtung (38) und der Kontextspeicher (40), insbesondere begrenzt durch einen zeitlich entsprechend dimensionierten oder von einer Bedienperson auslösbaren Rücksetzvorgang, ausgelegt sind, das Auslesen des dekodierten Werts mindestens eines Protokollelements aus dem Kontextspeicher (40) vorzunehmen, das in einer Nachricht übertragen wurde, die früher versandt wurde als die augenblicklich durch die generische Dekodiervorrichtung (10) dekodierte Nachricht.

5. Verfahren zum Analysieren von Kommunikationsprotokollen mit einer generischen Dekodiervorrichtung (10) gemäß Anspruch 1, in die mindestens eine Protokollbeschreibung eines Kommunikationsprotokolls geladen ist, wobei die mindestens eine Proto-kollbeschreibung in einer generischen Protokollbeschreibungssprache gemäß Anspruch 1 formuliert ist, die von der generischen Dekodiervorrichtung (18) interpretierbar ist;
mit folgenden Schritten:
a) Speichern mindestens eines dekodierten Werts eines Protokollelements unter einer vorgebbaren Adresse in einem Kontextspeicher (40), während die generische Dekodiervorrichtung (18) ein erstes Nachrichtenpaket dekodiert, wobei die dekodierten Werte von Protokollelementen im Kontextspeicher (40) abgespeichert werden, die in der Protokollbeschreibung mit einer ersten Anweisung **gekennzeichnet** sind;
b) Auslesen des im Kontextspeicher (40) abgespeicherten dekodierten Werts eines Protokollelements, während die generische Dekodiervorrichtung (18) ein zweites Nachrichtenpaket dekodiert; und
c) Dekodieren des zweiten Nachrichtenpakets unter Verwendung des aus dem Kontextspeicher (40) ausgelesenen dekodierten Werts eines Protokollelements.

6. Verfahren nach Anspruch 5,
**dadurch gekennzeichnet,**
**dass** Schritt a) folgenden Schritt umfasst:
a1) Bilden einer Adresse, an der der dekodierte Wert des Protokollelements abgespeichert wird, zumindest aus dem dekodierten Wert mindestens eines Protokollelements.

7. Verfahren nach Anspruch 5 oder 6,
**dadurch gekennzeichnet,**
**dass** Schritt a) folgenden Schritt umfasst:
a2) Registrieren im Kontextspeicher (40) der Protokollelemente, die im Kontextspeicher (40) abgespeichert werden sollen.

8. Verfahren nach Anspruch 7,
**dadurch gekennzeichnet,**
**dass** in Schritt a2) das Registrieren der Protokollelemente in Abhängigkeit der in die generische Dekodiervorrichtung (18) geladenen Protokollbeschreibung automatisch erfolgt, insbesondere zum Zeitpunkt des Ladens der Protokollbeschreibung in die generische Dekodiervorrichtung (18).

9. Verfahren nach einem der Ansprüche 5 bis 8,
**dadurch gekennzeichnet,**
**dass** in Schritt b) die dekodierten Werte von Protokollelementen aus dem Kontextspeicher (40) ausgelesen werden, die in der Protokollbeschreibung mit einer zweiten Anweisung **gekennzeichnet** sind.

## Claims

1. System comprising a decoding device (10) and a protocol description language for analysing communication protocols, comprising:
- a generic decoding device (18), into which at least one protocol description of a communication protocol is loadable, the at least one protocol description being formulated in a generic protocol description language, which is interpretable by the generic decoding device (18);
wherein the decoding device (10) further comprises:
- a context memory (40) for storing decoded values of protocol elements under a specifiable address; and
- a generic context administration device (38), which is designed to enable at least the storing and the reading-out of the decoded values of protocol elements in/from the context memory (40) through the generic decoding device;
**characterised in that**
the generic protocol description language is expanded by a first instruction, which is designed to cause the generic context administration device (38) to file the decoded value of at least one protocol element under a specifiable address in the context memory (40); and
the context memory (40) is designed to store those decoded values of protocol elements that are marked in the protocol description with a first instruction.

2. System according to claim 1,
**characterised in that**
the generic protocol description language is expanded by a second instruction, which is designed to cause the generic context administration device (38) to read out the decoded value, stored in the context memory (40) under a specifiable address, of at least one protocol element.

3. System according to any one of claims 1 or 2,
**characterised in that**
the generic protocol description language is expanded by a third instruction, which is designed to form at least from the decoded value of at least one protocol element the specifiable address for the context memory (40), the generic context administration device (38) being designed to file under this address the decoded value of at least one protocol element.

4. System according to any one of the preceding claims,
**characterised in that**
the generic context administration device (38) and the context memory (40), limited in particular by a reset action that is dimensioned accordingly in terms of time or actuatable by an operator, are designed to perform the reading-out of the decoded value of at least one protocol element from the context memory (40), which protocol element was transmitted in a message sent earlier than the message decoded at that moment by the generic decoding device (10).

5. Method for analysing communication protocols with a generic decoding device (10) according to claim 1 into which at least one protocol description of a communication protocol is loaded, the at least one protocol description being formulated in a generic protocol description language according to claim 1, which is interpretable by the generic decoding device (18);
comprising the following steps:
a) storing at least one decoded value of a protocol element under a specifiable address in a context memory (40), whilst the generic decoding device (18) decodes a first message package, wherein those decoded values of protocol elements that are marked in the protocol description with a first instruction are stored in the context memory (40);
b) reading-out of the decoded value of a protocol element stored in the context memory (40), whilst the generic decoding device (18) decodes a second message package; and
c) decoding the second message package using the decoded value of a protocol element read out from the context memory (40).

6. Method according to claim 5,
**characterised in that**
step a) comprises the following step:
a1) forming an address, at which the decoded value of the protocol element is stored, at least from the decoded value of at least one protocol element.

7. Method according to any one of claims 5 or 6,
**characterised in that**
step a) comprises the following step:
a2) registering, in the context memory (40), of the protocol elements that are to be stored in the context memory (40).

8. Method according to claim 7,
**characterised in that**
in step a2) the registering of the protocol elements occurs automatically depending on the protocol description loaded into the generic decoding device (18), particularly at the time of the loading of the protocol description into the generic decoding device (18).

9. Method according to any one of claims 5 to 8,
**characterised in that**
in step b) those decoded values of protocol elements that are marked in the protocol description with a second instruction are read out from the context memory (40).

## Revendications

1. Système comprenant un dispositif de décodage (10) et un langage de description de protocole pour l'analyse de protocoles de communication comprenant :
- un dispositif de décodage générique (18), dans lequel au moins une description de protocole d'un protocole de communication peut être chargée, l'au moins une description de protocole étant formulée dans un langage générique de description de protocole, lequel est interprétable par le dispositif de décodage générique (18) ;
le dispositif de décodage (10) comprenant en outre :
- une mémoire de contexte (40) destinée à mettre en mémoire des valeurs décodées d'éléments de protocole sous une adresse prédéterminable ; et
- un dispositif générique de gestion de contexte (38) qui est conçu pour permettre au moins la mise en mémoire et la lecture des valeurs décodées d'éléments de protocole dans la mémoire de contexte (40) resp. à partir de la mémoire de contexte au moyen du dispositif de décodage générique ;
**caractérisé en ce**
**que** le langage générique de description de protocole est étendu d'une première instruction qui est conçue pour inciter le dispositif générique de gestion de contexte (38) à placer en mémoire dans la mémoire de contexte (40) la valeur décodée d'au moins un élément de protocole sous une adresse prédéterminable ; et en ce que
la mémoire de contexte (40) est conçue pour mettre en mémoire les valeurs décodées d'éléments de protocole qui sont **caractérisés par** une première instruction dans la description de protocole.

2. Système selon la revendication 1,
**caractérisé en ce**
**que** le langage générique de description de protocole est étendu d'une deuxième instruction qui est conçue pour inciter le dispositif générique de gestion de contexte (38) à lire la valeur décodée d'au moins un élément de protocole, mise en mémoire sous une adresse prédéterminable dans la mémoire de contexte (40).

3. Système selon la revendication 1 ou 2,
**caractérisé en ce**
**que** le langage générique de description de protocole est étendu d'une troisième instruction qui est conçue pour former, au moins à partir de la valeur décodée d'au moins un élément de protocole, l'adresse prédéterminable pour la mémoire de contexte (40), le dispositif générique de gestion de contexte (38) étant réalisé pour placer en mémoire sous cette adresse la valeur décodée d'au moins un élément de protocole.

4. Système selon l'une quelconque des revendications précédentes,
**caractérisé en ce**
**que** le dispositif générique de gestion de contexte (38) et la mémoire de contexte (40), notamment limités par une opération de remise à l'état initial dimensionnée temporellement de manière correspondante ou pouvant être déclenchée par une personne de service, sont conçus pour effectuer à partir de la mémoire de contexte (40) la lecture de la valeur décodée d'au moins un élément de protocole qui a été transmis dans un message émis plus tôt que le message décodé momentanément par le dispositif de décodage générique (10).

5. Procédé d'analyse de protocoles de communication à l'aide d'un dispositif de décodage générique (10) selon la revendication 1, dans lequel au moins une description de protocole d'un protocole de communication est chargée, l'au moins une description de protocole étant formulée dans un langage générique de description de protocole selon la revendication 1, lequel est interprétable par le dispositif de décodage générique (18) ;
comprenant les étapes suivantes :
a)mise en mémoire dans une mémoire de contexte (40) d'au moins une valeur décodée d'un élément de protocole sous une adresse prédéterminable, pendant que le dispositif de décodage générique (18) décode un premier paquet de messages, les valeurs décodées d'éléments de protocole étant mises en mémoire dans la mémoire de contexte (40), lesquelles sont **caractérisées par** une première instruction dans la description de protocole ;
b) lecture de la valeur décodée mise en mémoire dans la mémoire de contexte (40), pendant que le dispositif de décodage générique (18) décode un deuxième paquet de messages ; et
c) décodage du deuxième paquet de messages en utilisant la valeur décodée, lue à partir de la mémoire de contexte (40), d'un élément de protocole.

6. Procédé selon la revendication 5,
**caractérisé en ce**
**que** l'étape a) comprend l'étape suivante :
a1) formation d'une adresse à laquelle la valeur décodée de l'élément de protocole est mise en mémoire, au moins à partir de la valeur décodée d'au moins un élément de protocole.

7. Procédé selon la revendication 5 ou 6,
**caractérisé en ce**
**que** l'étape a) comprend l'étape suivante :
a2) enregistrement dans la mémoire de contexte (40) des éléments de protocole qui doivent être mis en mémoire dans la mémoire de contexte (40).

8. Procédé selon la revendication 7,
**caractérisé en ce**
**qu'**à l'étape a2), l'enregistrement des éléments de protocole est réalisé automatiquement en fonction de la description de protocole chargée dans le dispositif de décodage générique (18), notamment au moment du chargement de la description de protocole dans le dispositif de décodage générique (18).

9. Procédé selon l'une quelconque des revendications 5 à 8,
**caractérisé en ce**
**qu'**à l'étape b), les valeurs décodées d'éléments de protocole sont lues à partir de la mémoire de contexte (40), lesquelles sont **caractérisées par** une deuxième instruction dans la description de protocole.
